(19)
Europäisches
Patentamt

European
Patent Office

Office européen
des brevets

(11) **EP 1 716 674 B1**

(12) **EUROPEAN PATENT SPECIFICATION**

(45) Date of publication and mention
of the grant of the patent:
**11.04.2007 Bulletin 2007/15**

(21) Application number: **04804262.6**

(22) Date of filing: **23.12.2004**

(51) Int Cl.:
***H04L 12/56*** *(2006.01)*

(86) International application number:
**PCT/EP2004/014668**

(87) International publication number:
**WO 2005/064863 (14.07.2005 Gazette 2005/28)**

(54) **METHOD AND ARRANGEMENT IN WIRELESS AD HOC OR MULTIHOP NETWORKS**

VERFAHREN UND EINRICHTUNG IN DRAHTLOSEN AD-HOC- ODER MEHRFACHSPRUNG-
NETZWERKEN

PROCEDE ET DISPOSITIF DANS DES RESEAUX SANS FIL AD-HOC OU A BONDS MULTIPLES

(84) Designated Contracting States:
**AT BE BG CH CY CZ DE DK EE ES FI FR GB GR
HU IE IS IT LI LT LU MC NL PL PT RO SE SI SK TR**

(30) Priority: **30.12.2003 SE 0303584
29.06.2004 EP 04015198**

(43) Date of publication of application:
**02.11.2006 Bulletin 2006/44**

(73) Proprietor: **TELEFONAKTIEBOLAGET LM
ERICSSON (publ)
126 25 Stockholm (SE)**

(72) Inventors:
• **LARSSON, Peter
S-169 71 Solna (SE)**
• **JOHANSSON, Niklas, J.
S-177 71 Järfälla (SE)**

(74) Representative: **Sörby, Lennart et al
Dr. Ludwig Brann Patentbyrä AB
Box 171 92
104 62 Stockholm (SE)**

(56) References cited:
EP-A- 1 511 234        WO-A-01/73959
WO-A-01/92992        WO-A-20/04023241
US-A1- 2002 044 533

## Description

### Field of Invention

The present invention relates to wireless multihop or ad hoc communication networks. In particular, the present invention relates to the use of beaconing or "hello" messages in such networks.

### Background of the Invention

The concepts of self-organising wireless networks for mobile communication has been known since the seventies, at least, but the research and uses of such systems were in the early years restricted to military and emergency applications. The potential of the systems for all kinds of communication were surly recognized, but the cost of the equipment and the complexity of the systems caused the use to be very limited.

In recent years, the interest in self-organising networks have seen a significant interest. Some of the driving forces being the wish to provided various types of communication to a large variety of devices, the understanding that all devices does not need to have long range wireless communication capabilities if they instead can communicate over short range with another device which has long range wireless communication capabilities and the increased use of mobile equipment such as laptop computers, personal digital assistants (PDA), and digital cameras, equipment which would clearly increase their usefulness if possible to communicate with/from also then not in their "home environment" and not at least the existence of the Internet providing a reason for such communication to be sought for. At the same time has the technology evolved with regards to transceivers, batteries, radio transmission techniques- it has become technical feasible and economically justifiable to provide a large number of different types of devices with means for wireless communication, for example transceivers, coders/decoders etc. Ad hoc networks and Multihop networks are among the self-organising networks that have drawn major attention. In this type of networks, a plurality and preferably all mobile nodes, for example a cellular phone/mobile terminal, a PDA or a Laptop, are capable of operating as a radio base station or router (mobile host) for other mobile nodes. The need for a fixed infrastructure is thus eliminated, though access to a fixed network, such as Internet, is a good complement to a fully ad hoc operation. Accordingly, data packets being sent from a source mobile node to a destination mobile node is typically routed through a number of intermediate mobile nodes (multi-hopping) before reaching the destination mobile node. An Ad hoc network is typically completely self-organising in that the routing paths (hopping sequence) are not predetermined in any way, although elaborate optimization routines may be used to find the best paths. Ad hoc networks generally uses multihopping. Multihop networks may have some predetermined preferred hopping schemes, i.e. a multihop networks is not necessarily an ad hoc network.

The nodes in the network typically keeps a preferably recently updated routing table, specifying mobile nodes which the present node is able to send a data packets to. In a multihop network, using data packet routing or similar, the following procedure is performed for each packet being routed: When a node receives a packet, it checks its routing table for the next hop node leading the data packet towards destination. If the receiving node does not have any next hop node, and is not the destination, then routing table state is inconsistent in the multihop network. To update the state, the receiving node may e.g. initiate a route search to the destination, wait until the state is updated automatically (may be performed on a regular basis), or simply respond to the previous station that it does not have a correctly operating route, and said previous station may try another route. The latter case does however not really solve the full problem, but slightly alleviates it.. The process continues until the data packet eventually reaches the destination node. Alternatively, no routing lists are kept in the mobile nodes and the routing paths are established per session. The routing procedures and updating of routing lists can be performed in a great variety of ways, and many are reported in the art.

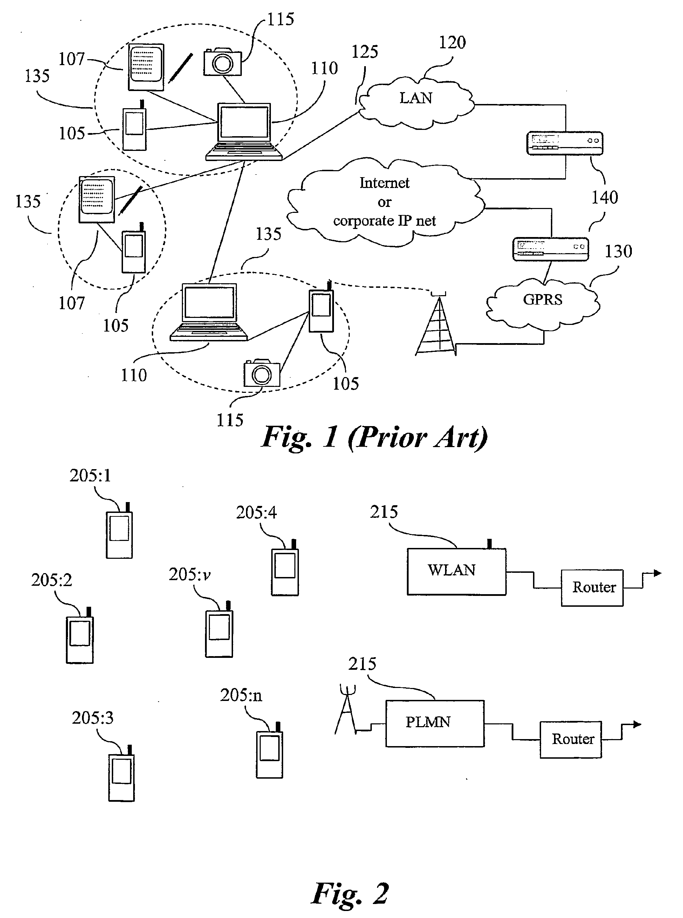

The ad hoc and multihop networks today envisaged, do not only provided communication between mobile nodes of different kind, but also enables the mobile nodes to access fixed networks and thus communicate with other types of terminals, get access to information on databases and download files for information or entertainment etc. The fixed networks comprise the public switched telephone network (PSTN), public land mobile network (PLMN), local area networks (LAN) and Internet. A comprehensive description of ad hoc and multihop networks are given in "Wireless ad hoc networking- The art of networking without a network", by M. Frodigh et al, Ericsson Review, pp 248-263 (4) 2000. An exemplary ad hoc network is shown in FIG. 1, comprising mobile nodes such as mobile terminals 105, PDAs 105, laptops 110, and other equipment provided with communication devices such as digital cameras 115, as well as communication networks such as a LAN 120, provided with an wireless access point 125, and a wireless cellular communication network 130 adapted for GPRS. These networks are typically interconnected to Internet or a corporate IP network via routers 140. The mobile nodes form personal area networks 135 (PAN), in which they communicate and mobile nodes in the different PANs connect to nodes in other PANs and to the other communication networks. Thereby each mobile node has the possibility to communicate with all other nodes and the communication networks through multihopping.

The organisation and optimization of ad hoc and multihop networks are far from trivial. An ad hoc or multihop network can, during certain circumstances, produce extensive signalling that is not productive in that is does not deliver payload data to the destination. Optimization of ad hoc networks has shown to be necessary to save the radio resources and power i.e. in most cases battery life. Due to the mobility of the nodes the topology of the network may change frequently and in an unpredictable way. Furthermore, devices may suddenly be switched on or off (or go into some sleep mode), causing new links to appear or existing links to vanish. Routing in such a dynamic environment is a difficult task. A large research activity is to be found in this field, and manifested in e.g. the WIPO publications WO 02/35779 and WO 03/079611. The power concerns are established in the above-referred Ericsson Review publication. WO 02/35779 teaches a method of performing the multi-hopping in an effective way by considering and exchanging the "cost" of forwarding a data packet to its destination. Taught in WO 03/079611 are methods for adapting the power used in a transmission based on estimates of path loss and noise level.

To be able to perform routing and keep connections alive in this environment mobile nodes (as well as generally also in fixed networks) exchange so called beacon messages (or HELLO messages) in the form of small packets. In some cases nodes use the beacons also to maintain a table of one-hop route entries for each neighbouring node, e.g. allowing the nodes to perform route setup and route maintenance. Optimization algorithms generally depend heavily on the result of the beaconing. Beaconing is especially important when performing Quality of Service QoS routing since good knowledge of the topology is a necessity in this case. Beacons may also be used for neighbour discovery, synchronisation (after receiving a beacon frame, a station uses the timestamp value to update its local clock) and to learn about the data rates supported by the other nodes.

Although necessary for the communication in ad hoc and multihop networks, beaconing uses scarce battery power for transmitting, receiving and processing of beacons and as well disturbs sleep cycles of nodes. Moreover, beacons may also interfere with regular data transmissions. Hence, data packets are destroyed and need to be retransmitted, consuming even more battery power, reducing the capacity in the network, and introducing additional delay. In addition, stations using power save mode will need to consume more power because they'll need to awaken more often, which reduces power saving mode benefits. A similar reasoning may also be performed for the used transmit power.

WO 01/92992 and WO 01/73959 teach methods of a radio node, or router, transmitting beacon messages to other radio nodes in a network. The rate of which the node/router transmits its beacons is adaptive. The rate is determined from for example physical speed, the change in wireless connectivity with nearby neighbour nodes or expected plans for further movement. The rate may further be influenced by the start up conditions of the node/router. The physical speed, which only refers to the speed of node/router in question, can be determined from for example positioning tools or by monitoring the rate of change of nearby nodes over time.

## Summary of the Invention

Beaconing is very important in all ad hoc and multihop networks (especially for QoS routing) since the topology need to be well reflected in multihop networks for efficient operation. However, the amount of overhead that the transmissions of beacons generate can be substantial, the power consumed for the transmission degrading the battery lifetime and the radio resources taken up and the interference, added far from negligible.

The problem is to provide the desired precision of topology knowledge of an ad hoc or multihop network and at the same time limit the drawbacks of the beaconing stated above.

The object of the present invention is to provide a method, system and program that overcomes the drawbacks of the prior art techniques. This is achieved by the a method as defined in claim 1, the system as defined in claim 13, the radio node as defined in claim 10.

In the method according to the present invention beacon messages (HELLO messages) are transmitted between a plurality of radio nodes in an ad hoc or multihop network. The rate of which the radio nodes transmit their beacons is based on an estimate of the network dynamics. Also the transmit power of the beacons are preferably based on an estimate of the network dynamics. The radio nodes bases their estimate of the network dynamics on beacons received from neighboring radio nodes.

The method according to the invention may comprises the following steps. The method should be performed in at least one radio node, but preferably as many radio nodes as possible in the network.

a) -*defining* a subset of neighbours; wherein the first radio node

b) -*recording and storing* beacon messages or beacon parameters relating to beacon messages from at least a second radio node which is part of the subset;

c) -*estimating* the network dynamics, based on the beacons received, or beacon parameters, from at least the second radio node in the subset;

d) -*determining* beacon transmission rate, based on the estimate of the network dynamics.

The method may also comprise a step of comparing estimates of network dynamics, wherein if the current estimate of network dynamics differ with at least a predetermined amount from a previous estimate of the network dynamics, the method proceeds to the determining step d), and otherwise the first the method continues to monitor the neighbouring radio nodes in the subset (steps a-c).

The system of a plurality of radio nodes according to the present invention is forms an ad hoc or multihop network, wherein the radio nodes transmits beacon messages (HELLO messages) between each other. The rate of which at least one of the radio nodes in the system transmit its beacons is based on an estimate of network dynamics.

The radio node according to the present invention is adapted to communicate with a plurality of other radio nodes in an ad hoc or multihop network, wherein the radio node transmits and receives beacon messages (HELLO messages) to and from at least one of the radio nodes of the plurality of radio nodes. The rate of which the radio node transmit its beacons is based on an estimate of network dynamics.

According to one embodiment of the present invention the radio node comprises a transmitting part and a receiving part, which comprises a transmitter and a receiver and thereto associated signal processing means, respectively. The receiving part is arranged to receive, store and process a plurality of beacon messages to determine an estimate of the networks dynamics, and in that the transmitting part is arranged to adjust the rate of which the radio node transmits beacons is based on the estimate of the network dynamics. This may preferably be implemented so that the receiving part comprises a beacon recording module for recording a plurality of beacon messages, and determining beacon parameters. The beacon parameters comprising for example the respective received signal power and time of arrival of the received beacon messages. The receiving part further comprises a storing module for storing the beacon parameters, and a statistical processing module for performing the statistical analysis on the beacon parameters provided by the storing module. The transmitting part preferably comprises a beacon adjusting module for determining and adjusting the transmission rate and/or power of transmitted beacon messages based on the estimate of the network dynamics provided by the statistical processing module.

Thanks to the present invention it is possible to minimise the overhead related to beacon messages in an ad hoc or multihop network.

One advantage of the present invention is that the accuracy of the topology map is good, and connections are efficiently maintained when topology changes, e.g. caused by the mobility among the mobile radio nodes. This will improve the throughput for connections in the network. An efficient beacon protocol, such as provided by the method of the present invention, is especially important for multihop networks offering QoS (Quality of Service) with bandwidth (i.e. data rate) guarantees.

A further advantage is that method and arrangement according to the present invention will further significantly reduce the power consumption of the radio nodes, and at the same time assure that the accuracy of the topology map is good. This will improve battery lifetime of the mobile radio nodes.

Embodiments of the invention are defined in the dependent claims. Other objects, advantages and novel features of the invention will become apparent from the following detailed description of the invention when considered in conjunction with the accompanying drawings and claims.

**Brief Description of the Drawings**

The invention will now be described in detail with reference to the drawing figures, wherein

Fig. 1 is a schematic view over a plurality of ad hoc network and access points to fixed networks (Prior Art);

Fig. 2 is a schematic view over nodes forming an ad hoc network in which the method according to the present invention may be utilized;

Fig. 3 is a flowchart over the method according to the present invention;

Fig. 4 a-f illustrate different scenarios in a network that influence the estimate of the network dynamics in the method according to the present invention; and

Fig. 5 is a schematic illustration of a radio node according to the present invention.

**Detailed Description of the invention**

FIG. 2 is a schematic view illustrating an example of an ad hoc or multihop wireless communication network 200, in which the method and arrangement according to the present invention advantageously may be utilized. The network comprises a plurality of mobile radio nodes, 205:1, 205:2, ..., 205:v,..., 205:n. Preferably each mobile radio node 205 has the capability of acting as a router. Examples of mobile radio nodes include, but are not limited to mobile terminals (cellular phones), laptop computers and PDAs with wireless communication interfaces, and combination of such devices. Various radio transmissions techniques may be utilized, for example, time division multiple access (TDMA), spatial time division multiple access (STDMA), code division multiple access (CDMA), carrier sense multiple access (CSMA), or standards such as Bluetooth™ and WLAN. The network may also comprise devices (not shown) that has limited, or none, routing capability, which can communicate with other entities in the network, but not transfer messages. In addition the network may comprise fixed radio nodes 215, which preferably provides access points to other communication networks such as LANs, PLMNs (i.e. cellular systems) and PSTNs.

The mobile radio nodes 205 may move around, go into sleep-mode, leave the network, for e.g. by being turned off, and other radio nodes 205 may be added to the network. The scenario is then an ever changing communication network, wherein the rate of change and the magnitude of change may differ significantly for different networks and parts of networks, but also a particular network may have a different behaviour at different times, for example. The term *network dynamics*, which will be used hereinafter, is meant to characterize the dynamic properties of an ad hoc or multihop wireless communication network, and may be based on measures on rate of changes and magnitude of changes in the network.

The radio nodes 205, as previously described, maintain the network by repeated signalling with beacon (or HELLO) messages, which are needed to establish possible routing paths. The beacon messages typically represent a significant amount of overhead in the network and consume power.

In the method and arrangement according to the present invention the mobile radio nodes 205 and possibly also the fixed radio nodes 215 of the ad hoc or multihop wireless communication network 200, adapt the period in-between its transmitted the beacon messages and/or the transmission power used in transmitting the beacon massages, based on the networks dynamics. According to the inventive method radio nodes 205, 215 draws conclusions about network dynamics based on the incoming beacon messages from other radio nodes. Hence, the method may be seen as distributed to the individual radio nodes, as preferably each node make its own analysis and adaptation, based on the local topology of the network.

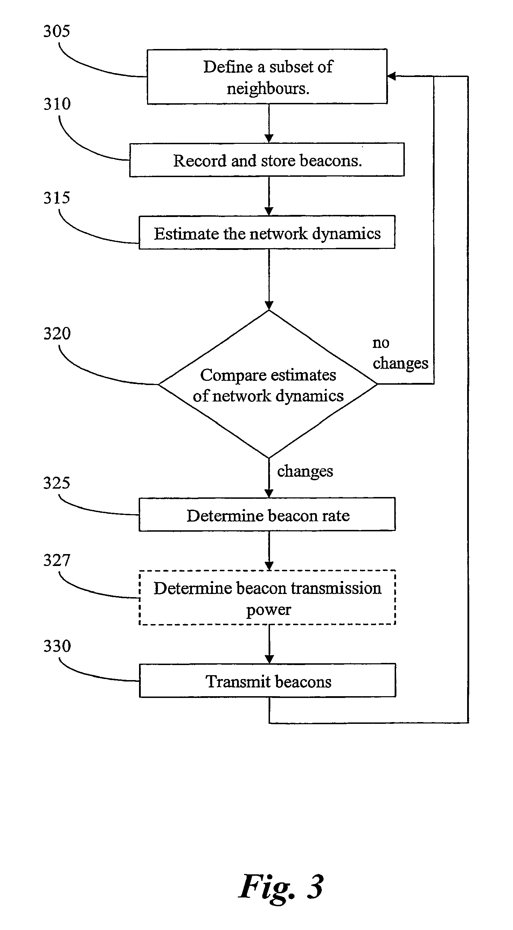

Considering the mobile radio node 205:ν, a first embodiment of the method according to the invention comprises the following main steps, preferably to be executed in each radio node 205, 215, which steps are illustrated in the flowchart of FIG. 3.

305: Define a subset of neighbours.

It is often not feasible to take all radio nodes in the network under consideration. Therefore a subset of neighbouring radio nodes is defined for the mobile radio node 205:υ. The subset, denoted $NB_ν$, may comprise a predetermined number of the closest radio nodes, for example the ten closest neighbours. Alternatively radio nodes within a predetermined distance are comprised in the subset. Preferably, distances relates to the path loss of the radio signal of the beacon message, but other form of measures of distances may be used, if such are available, e.g. by the use of GPS.

310: Record and store beacons.

The mobile radio node 205:v record beacon messages from each of the neighbours in the subset $NB_ν$ and stores beacon parameters for the respective beacon messages. The beacon parameters may comprise received power, time of arrival, measures of distance or position of the sending node, for example. The parameters may be derived by the receiving radio node or alternatively, or in combination with, parameters that have been included by the sending radio node in the beacon message.

315: Estimate the network dynamics.

Based on the beacon parameters of the received beacon messages from the neighbours in the subset $NB_ν$ the mobile radio node 205:v makes an estimate of the network dynamics as experienced by that radio node. A predetermined number of previously received beacons, or alternatively beacons received in a predetermined time period are considered. The estimate may take into account the magnitude of changes and the rate of changes in the subset of neighbours $NB_ν$, preferably by measuring relative path loss i.e. a measure of the relative speed of the mobile radio node 205:υ, as compared to its neighbouring radio nodes. Hence, a mobile radio node in the subset $NB_ν$ that is close to the mobile radio node 205:υ, and moving with a certain speed, will have greater impact on the estimate of the network dynamics than another mobile radio node, moving with the same speed but at a greater distance from the mobile radio node 205: υ. In other words, changes in a local region of the mobile radio node 205:υ will be given higher weight than changes in a remote region, in the estimate of the network dynamics.

320: Compare estimates of network dynamics.

If the current estimate of network dynamics differs from the previous, or alternatively and preferably: differ with a predetermined amount, the algorithm proceeds with step 325. Otherwise, i.e. no or insignificant changes in the estimate, the mobile radio node 205:υ continues to monitor the neighbouring radio nodes to detect changes in the network dynamics, i.e. steps 305-320.

325: Determine beacon rate.

The mobile radio node 205:υ determines a rate for the transmission of beacon messages based on the estimate of the network dynamics from step 315.

330: Transmit beacons.

The mobile radio node 205:υ transmit beacon messages adapted to the network dynamics. The steps 305-320 are repeated to determine if the beacon transmit rate and/or transmit power should be updated.

As previously discussed the transmission power of the beacons may advantageously be adjusted based on the network dynamics, in the same manner as the beacon transmission rate. The method may then further comprise the additional step of:

327: Determine beacon transmission power.

The mobile radio node 205:υ determines a transmission power for the beacon messages based on the estimate of the network dynamics from step 315.

In a second embodiment of the present invention the mobile radio node 205:υ determines a beacon rate and possibly a transmit power for each beacon it will transmit. Steps 315-325 (327) will then be replaced by steps 315', and 330 by 330', according to:

315': Determine beacon rate and transmission power.

The mobile radio node 205:υ determines the beacon rate and possibly transmit power for the next beacon based on the path loss history of the radio nodes in the subset $NB_v$.

330': Transmit beacons.

The mobile radio node 205:υ transmit a beacon adapted to the network dynamics as determined in step 315'.

This alternative embodiment may be described in a more formalistic way in which the transmit power $P_{TX}^i(v)$ and the beacon rate $B_{rate}^i(v)$ for the $i$:th beacon of the mobile radio node 205:υ may be calculated as a function of the path loss history:

$$P_{TX}^i(v) = f_1\left(G_{j_k}; j_k \in J_k, k \in NB_v\right), \qquad (1)$$

$$B_{rate}^i(v) = f_2\left(G_{j_k}; j_k \in J_k, k \in NB_v\right), \qquad (2)$$

wherein $G_{jk}$ is the path loss towards radio node $k$ for the $j$:th beacon received from radio node $k$, $J_k$ is the (possibly truncated) history of beacons received from radio node $k$, and $NB_v$ are the neighbours of node υ, and $f_1$ and $f_2$ are some arbitrary objective functions that regulate the transmit power and the beacon rate to some predetermined performance goals. The objective functions shall be interpreted in a broad sense in that it can involve simple linear processing of input parameters or more advanced processing involving various mathematical tools such as transforms, iterations, etc. As can be deduced from the above formulation, the neighbour with the highest relative speed in respect to the centre of gravity of the nodes will have the most impact on the transmit power and beacon rate. The path loss (or path gain) may preferably be determined by that the beacons indicate the power levels used in the header of the beacon message. Based on receive power level and knowledge on transmitted level, the (open loop) path gain is easily determined. Other methods (e.g. closed loop approaches) for path loss determination may also be used. The transmit power $P_{TX}^i(v)$ and the beacon rate $B_{rate}^i(v)$ for the $i$:th beacon of the mobile radio node 205:υ can, apart from using relation (1) and (2), possibly also be determined from a single objective function that is optimized by searching the definition space of $P_{TX}^i(v)$ $B_{rate}^i(v)$.

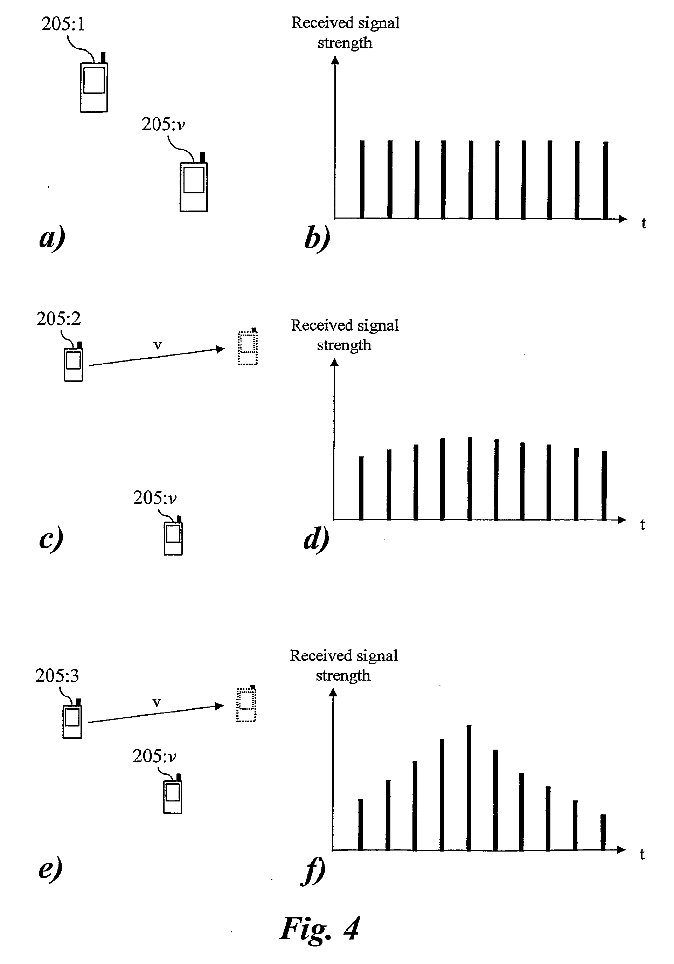

The impact on the estimate of network dynamics from the neighbours with respect to their relative speed may be visualised as in FIG. 4 a-f. Depicted in FIG. 4a the mobile radio node 205:υ is in a stationary situation with the mobile radio node 205:1. The two mobile radio nodes are probably both stationary, but a stationary situation may also occur if the two radio nodes are moving with essentially the same velocity. In FIG. 4b the beacons from the mobile radio node 205:1 as received by the mobile radio node 205:υ is graphically illustrated as received signal strength vs. time. This can also be seen as an illustration of the history of beacons $J_k$ ($k$=1). As seen in the graph, the beacons from the mobile radio node 205:1 are received with essentially constant strength, apart from some variations due to variations in time of the radio channel. In FIG. 4 c and d, a mobile radio node 205:2 is moving at a speed v at a fairly large distance from the mobile radio node 205:υ. As the relative speed between the mobile radio nodes 205:υ and 205:2 will be small if the distance between them is large the changes over time in the received signal strength of the beacons transmitted by the mobile radio node 205:1 and received by the mobile radio node 205:υ will be moderate, which is seen in FIG. 4d. If on another hand a mobile radio node 205:3 is close to the mobile radio node 205:υ, as shown in FIG. 4e, and moves with the same speed v, for example, the relative speed between the mobile radio nodes 205:υ and 205:2 will be large. This will be reflected in the history of the beacons as illustrated in the graph of FIG. 4f, wherein significant changes in the received signal strength is seen.

The history of the beacons as received by the mobile radio node 205:υ may be analysed with known methods, for example simple measures as relative differences between consecutive beacons, changes in the derivative of the received signal strength or with more elaborate statistical methods.

In the above scenario the mobile radio node 205:3 will have the greatest impact on the network dynamics as experienced by the mobile radio node 205:υ, which will have to adapt its beacon transmission rate to that radio node, typically a relatively high rate. If the mobile radio node 205:3 were not present, an almost stationary network would be seen by the mobile radio node 205:υ and hence a lower rate could be used. The beacon transmission power will typically be governed mostly by the more remote neighbour, rather than a close neighbour with high relative speed. However, the history of the beacons can be used to for example predict that a fast moving mobile radio node soon will need a high transmission power, as will be further discussed below.

For simplicity the beacon rates has in FIG. 4 b, d and f been illustrated as equal and constant. If the method according to the invention is utilised by the radio nodes in the network, the beacon rate is a variable parameter. This does not necessarily limit the analysis of the received beacons. In fact, since the rate of which a radio node transmit its beacons is a reflection of how that radio node experience the network, by another radio node received beacon rate can be incorporated in the estimate of the network dynamics. Note that in a region with high relative mobility the beacon rates will be high to reflect changes in the actual topology, whereas in other regions where the relative mobility is lower the rates will be low as there are no or few significant changes in the network topology.

From the estimates of the network dynamics it is, in the exemplified embodiments of the invention, possible to draw conclusions about the networks future behaviour and hence, appropriate future beacon rates and transmission powers. These types of conclusions can be made thanks to that the histories of the received beacons from each radio node are analysed. From this conclusions on for example relative velocity of the mobile radio nodes can be made. A predictor may use this knowledge, possibly in combination with a priori knowledge or acquired knowledge, to estimate beacon rates and transmission powers for a future period of time. Suitable predictors are known in the art and could for instance be base on exponential smoothing or some sort of filter, depending on the needed accuracy. In a third embodiment of the invention a predicting functionality is included in the steps wherein the beacon rates and transmission powers are determined, corresponding to steps 325, 327 and 315' in the first and second embodiment, respectively.

The method according to the present invention may be implemented in various ways. A fourth embodiment of the invention exemplifies a possible implementation. In this embodiment of the invention, the transmit power and beacon rate are based on the previous transmit power and beacon rate and the absolute value of the relative difference in path loss $|\Delta G_{j_k}|$, i.e.:

$$\Delta G_{j_k} = \left| \frac{G_{j_k} - G_{j_k - 1}}{G_{j_k - 1}} \right| \tag{3}$$

and hence the transmit power and beacon rate is calculated as:

$$P_{TX}^i(v) = f_1\left(P_{TX}^{i-1}(v), G_{j_k}, \Delta G_{j_k}; i \in I, j_k \in J_k, k \in NB_v\right) \tag{4}$$

$$B_{rate}^i(v) = f_2\left(B_{rate}^{i-1}(v), G_{j_k}, \Delta G_{j_k}; i \in I, j_k \in J_k, k \in NB_v\right) \tag{5}$$

wherein *I* is the (possibly truncated) history of beacons transmitted by the mobile radio node 205:υ. The embodiment is convenient and efficient in that the history of the beacons are "reused" as the relative difference $\Delta G_{jk}$ is considered.

The present invention makes it possible to minimise the overhead related to beacon messages in an ad hoc or multihop network. The accuracy of the topology map is good, and connections are efficiently maintained when topology changes, e.g. caused by the mobility among the mobile radio nodes. This will improve the throughput for connections in the network. An efficient beacon protocol, such as provided by the method of the present invention, is especially important for multihop networks offering QoS (Quality of Service) with bandwidth (i.e. data rate) guarantees.

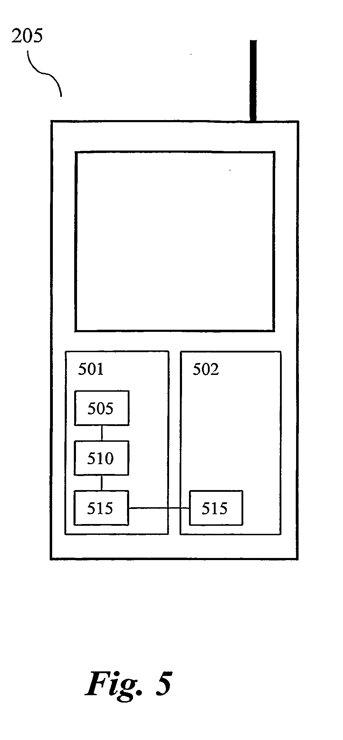

A radio node (205) adapted for utilizing the method according to the present invention is schematically illustrated in FIG. 5. The radio node according to the present invention comprises a transmitting part 501 and a receiving part 502, which comprises a transmitter and a receiver and thereto associated signal processing means, respectively. The receiving part is arranged to receive, store and process a plurality of beacon messages to determine an estimate of the networks dynamics, and in that the transmitting part is arranged to adjust the rate of which the radio node transmits beacons is based on the estimate of the network dynamics. This may preferably be implemented so that the receiving part 502 comprises a beacon recording module 505 for recording a plurality of beacon messages (step 310), and determining beacon parameters, the beacon parameters comprising for example the respective received signal power and time of arrival of the received beacon messages, a storing module 510 for storing the beacon parameters, and a statistical processing module 515 for performing the statistical analysis (steps 315, 320) on the beacon parameters provided by the storing module 510.

The transmitting part 501 preferably comprises a beacon adjusting module (520) for determining and adjusting the transmission rate and/or power of transmitted beacon messages (step 325, 327 and 330), based on the estimate of the network dynamics provided by the statistical processing module.

The above described implementation should be regarded as a non limiting example. As apparent to the skilled in the art the above "modules" should be regarded as functional units, and not necessarily physical entities, and comprising in this sense has the meaning of functionally linked modules.

The method and arrangement will further significantly reduce the power consumption of the radio nodes, and at the same time assure that the accuracy of the topology map is good. This will improve battery lifetime of the mobile radio nodes 205.

The method according to the present invention is preferably implemented by means of program products or program module products comprising the software code means for performing the steps of the method. The program products are preferably executed on a plurality of radio nodes 205, 215 within an ad hoc or multihop network. The program is distributed and loaded from a computer usable medium, such as a floppy disc, a CD, transmitted over the Internet etc.

While the invention has been described in connection with what is presently considered to be the most practical and preferred embodiments, it is to be understood that the invention is not to be limited to the disclosed embodiments, on the contrary, is intended to cover various modifications and equivalent arrangements included within the scope of the appended claims.

**Claims**

1. A method in a radio node (205), the first radio node, of transmitting beacon messages to at least a second radio node in an ad hoc or multihop network, wherein the ad hoc or multihop network comprises a plurality of further radio nodes (205, 215), wherein the rate of which the radio node transmits its beacons is adaptive, the method in the first radio node **characterised by** the steps of

   a) -*defining* a subset, $NB_v$, of neighbours (305);
   b) -*recording* a plurality of beacon message (310) from the radio nodes which are part of the subset, and determining the relative speed as compared to the first radio node of the radio nodes in the subset from the recorded respective plurality of beacon messages;
   c) -*estimating* the network dynamics (315), based on the relative speed of the radio nodes in the subset;
   d) -*determining* beacon rate (325), based on the estimate of the network dynamics.

2. Beacon transmitting method according to claim 1, **wherein** the beacon transmit power at which the first radio node radio transmits its beacons is based on the estimate of the network dynamics.

3. Beacon transmitting method according to claim 1 or 2, **wherein** the estimate of the network dynamics is based on analysis of the relative speed as compared to the first radio node of a plurality of neighbouring radio nodes and wherein the neighbouring radio node that exhibit the highest relative speed compared to the first radio node, is given the greatest impact on the estimate of the network dynamics.

4. Beacon transmitting method according to any of claims 1 to 3, **wherein** the method comprises a step, to be performed prior to the determining step d), of:

  - comparing estimates of network dynamics (320), wherein if the current estimate of network dynamics differ with at least a predetermined amount from a previous estimate of the network dynamics, the method proceeds to the determining step d), and otherwise the method continues to monitor the neighbouring radio nodes in the subset according to steps a) - c).

5. Beacon transmitting method according to any of claims 1 to 4, **wherein** the step of estimating the network dynamics, the estimate of the network dynamics is at least partly based on the path loss history of the beacons received from the radio nodes in the subset.

6. Beacon transmitting method according to any of claims 1 to 5, **further comprising** a step of *storing* beacon parameters of the respective beacon messages.

7. Beacon transmitting method according to claim 7, **wherein** the beacon parameters comprise at least one parameter relating to received signal strength of the beacon message, and at least one parameter relating to time of arrival of the beacon messages.

8. Beacon transmitting method according to claim 6 or 7, **wherein** the beacon parameters comprise parameters that have been included by the sending radio node in the beacon message.

9. Beacon transmitting method according to claim 8, **wherein** at least one parameter originally included by the sending radio node comprises a parameters relating to the position of the sending node.

10. A radio node (205) adapted for communication in an ad hoc or multihop network, the radio node comprising a transmitting part adapted to transmit beacon messages and a receiving part adapted to receive beacon messages, the radio node
**characterized by**

  - beacon recording means (505) for recording a plurality of beacon messages from a plurality of other radio nodes, and determining beacon parameters, the received beacon parameters comprising at least the respective received signal power and time of arrival of the received beacon messages;
  - storing means (510) for storing the received beacon parameters;
  - statistical processing means (515) for performing a statistical analysis on the stored plurality of beacon parameters, whereby producing an estimate of the network dynamics based on relative speed as compared to the radio node of each of the other radio nodes;
  - beacon adjusting means (520) for adjusting the transmission rate and/or power of transmitted beacon messages based on the estimate of the network dynamics.

11. Radio node according to claim 10, **wherein** the statistical processing means (515) is adapted to estimate the network dynamics at least partly based on analysis of the relative speed of a plurality of neighbouring radio nodes and wherein the neighbouring radio node that exhibit the highest relative speed compared to the radio node, is given the greatest impact on the estimate of the network dynamics.

12. Radio node according to any of claims 10 to 11, wherein the beacon receiving means (505) is adapted to define a subset, $NB_v$, of neighbouring radio nodes, and the storing means (510) is adapted to record and store received beacon parameters from at least a second radio node which is part of the subset.

13. A system of a plurality of radio nodes (205, 215) adapted to communicate in an ad hoc or multihop network, wherein the radio nodes (205, 215) are adapted to transmit beacon messages between each other, the system **characterised in that** the radio nodes (205, 215) of the system comprise means adapted to perform the beacon transmitting method according to any of the claims 1 to 9.

**Patentansprüche**

1. Verfahren in einem Funkknoten (205), nämlich einem ersten Funkknoten, zum Übertragen von Baken-Meldungen an zumindest einen zweiten Funkknoten in einem Ad-hoc- oder Multihop-Netzwerk, wobei das Ad-hoc- oder Multihop-Netzwerk eine Mehrzahl von weiteren Funkknoten (205, 215) enthält, wobei der Grad, bei welchem der Funkknoten seine Baken überträgt, adaptiv ist, wobei das Verfahren im ersten Funkknoten **gekennzeichnet ist durch** die Schritte:

   a) Bestimmen von einer Teilmenge $NB_v$ von Nachbarn (305);
   b) Aufzeichnen von einer Mehrzahl von Baken-Meldungen (310) von den Funkknoten, welche ein Teil der Teilmenge sind, und Bestimmen von der relativen Geschwindigkeit, und zwar verglichen mit dem ersten Funkknoten der Funkknoten in der Teilmenge aus der aufgezeichneten jeweiligen Mehrzahl von Baken-Meldungen;
   c) Abschätzen der Netzwerk-Dynamik (315), basierend auf der relativen Geschwindigkeit der Funkknoten in der Teilmenge;
   d) Bestimmen einer Baken-Rate (325), basierend auf der Abschätzung der Netzwerk-Dynamik.

2. Baken-Übertragungsverfahren nach Anspruch 1, bei welchem die Baken-Übertragungsleistung, bei welcher der erste Funkknoten seine Baken überträgt, auf der Abschätzung der Netzwerk-Dynamik basiert.

3. Baken-Übertragungsverfahren nach Anspruch 1 oder 2, bei welchem die Abschätzung der Netzwerk-Dynamik auf einer Analyse der relativen Geschwindigkeit, verglichen mit dem ersten Funkknoten aus einer Mehrzahl von benachbarten Funkknoten, basiert und bei welchem dem benachbarten Funkknoten, welcher die höchste relative Geschwindigkeit, verglichen mit dem ersten Funkknoten, aufweist, die größte Auswirkung auf die Abschätzung der Netzwerk-Dynamik gegeben wird.

4. Baken-Übertragungsverfahren nach einem der Ansprüche 1 bis 3, bei welchem das Verfahren einen vor dem Bestimmungsschritt d) durchzuführenden Schritt enthält aus:

   Vergleichen von Abschätzungen einer Netzwerk-Dynamik (320), wobei, wenn sich die aktuelle Abschätzung der Netzwerk-Dynamik zumindest um eine vorbestimmte Größe von einer vorherigen Abschätzung der Netzwerk-Dynamik unterscheidet, das Verfahren mit dem Bestimmungsschritt d) fortfährt, und andererseits das Verfahren damit fortfährt, die benachbarten Funkknoten in der Teilmenge gemäß von Schritten a) - c) zu beobachten.

5. Baken-Übertragungsverfahren nach einem der Ansprüche 1 bis 4, bei welchem beim Schritt des Abschätzens der Netzwerk-Dynamik, die Abschätzung der Netzwerk-Dynamik zumindest teilweise auf der Pfad-Verlusthistorie der Baken basiert, welche von den Funkknoten in der Teilmenge empfangen wird.

6. Baken-Übertragungsverfahren nach einem der Ansprüche 1 bis 5, welches ferner einen Schritt eines Speicherns von Baken-Parametern der jeweiligen Baken-Meldungen enthält.

7. Baken-Übertragungsverfahren nach Anspruch 7, bei welchem die Baken-Parameter zumindest einen Parameter, welcher sich auf eine empfangene Signalstärke der Baken-Meldung bezieht, und zumindest einen Parameter, welcher sich auf eine Ankunftszeit der Baken-Meldungen bezieht, enthalten.

8. Baken-Übertragungsverfahren nach Anspruch 6 oder 7, bei welchem die Baken-Parameter Parameter enthalten, welche durch den sendenden Funkknoten in die Baken-Meldung eingefügt wurden.

9. Baken-Übertragungsverfahren nach Anspruch 8, bei welchem zumindest ein Parameter, welcher ursprünglich durch den sendenden Funkknoten eingefügt wurde, einen Parameter bezüglich der Position des sendenden Knotens enthält.

10. Funkknoten (205), welcher zur Kommunikation in einem Ad-hoc- oder Multihop-Netzwerk angepasst ist, wobei der Funkknoten einen Übertragungsteil, welcher zur Übertragung von Baken-Meldungen angepasst ist, und einen Empfangsteil, welcher zum Empfangen von Baken-Meldungen angepasst ist, enthält, wobei der Funkknoten **gekennzeichnet ist durch**:

   ein Baken-Aufzeichnungsmittel (505) zum Aufzeichnen von einer Mehrzahl von Baken-Meldungen von einer Mehrzahl von weiteren Funkknoten, und zum Bestimmen von Baken-Parametern, wobei die empfangenen Baken-Parameter zumindest die jeweilige empfangene Signalleistung und Ankunftszeit der empfangenen Baken-Meldungen enthalten;

ein Speichermittel (510) zum Speichern der empfangenen Baken-Parameter;

ein Statistik-Verarbeitungsmittel (515), zum Durchführen von einer statistischen Analyse auf die gespeicherte Mehrzahl von Baken-Parameter, wobei eine Erzeugung von einer Abschätzung der Netzwerk-Dynamik auf einer relativen Geschwindigkeit, verglichen mit dem Funkknoten von jedem aus den weiteren Funkknoten, basiert;

ein Baken-Einstellmittel (520) zum Einstellen des Übertragungsgrades und/oder der Leistung der übertragenen Baken-Meldungen, basierend auf der Abschätzung der Netzwerk-Dynamik.

11. Funkknoten nach Anspruch 10, bei welchem das Statistik-Verarbeitungsmittel (515) dazu angepasst ist, die Netzwerk-Dynamik zumindest teilweise basierend auf einer Analyse von der relativen Geschwindigkeit von einer Mehrzahl von benachbarten Funkknoten abzuschätzen, und bei welchem dem benachbarten Funkknoten, welcher die höchste relative Geschwindigkeit verglichen mit dem Funkknoten aufweist, die größte Auswirkung auf die Abschätzung der Netzwerk-Dynamik gegeben wird.

12. Funkknoten nach einem der Ansprüche 10 bis 11, bei welchem das Baken-Empfangsmittel (505) dazu angepasst ist, eine Teilmenge $NB_v$ von benachbarten Funkknoten zu bestimmen, und das Speichermittel (510) dazu angepasst ist, empfangene Baken-Parameter von zumindest einem zweiten Funkknoten, welcher ein Teil von der Teilmenge ist, aufzuzeichnen und zu speichern.

13. System aus einer Mehrzahl von Funkknoten (205, 215), welche dazu angepasst sind, in einem Ad-hoc- oder Multihop-Netwerk zu kommunizieren, wobei die Funkknoten (205, 215) dazu angepasst sind; Baken-Meldungen untereinander zu übertragen, wobei das System **dadurch gekennzeichnet ist, dass** die Funkknoten (205, 215) des Systems ein Mittel enthalten, welches dazu angepasst ist, das Baken-Übertragungsverfahren nach einem der Ansprüche 1 bis 9 durchzuführen.

## Revendications

1. Procédé dans un noeud radio (205), le premier noeud radio, pour émettre des messages de balises vers au moins un deuxième noeud radio dans un réseau ad hoc ou à bonds multiples, dans lequel le réseau ad hoc ou à bonds multiples comprend une multiplicité de noeuds radio supplémentaires (205, 215), dans lequel le débit auquel le noeud radio émet ses balises est adaptatif, le procédé dans le premier noeud radio étant **caractérisé par** les étapes consistant à

a) - définir un sous-ensemble, $NB_v$, de voisins (305) ;
b) - *enregistrer* une multiplicité de messages de balises (310) provenant des noeuds radio qui font partie du sous-ensemble, et déterminer la vitesse relative, en comparaison avec le premier noeud radio, des noeuds radio dans le sous-ensemble d'après la multiplicité respective enregistrée de messages de balises ;
c) - *estimer* la dynamique de réseau (315), sur la base de la vitesse relative des noeuds radio dans le sous-ensemble ;
d) - *déterminer* le débit de balises (325), sur la base de l'estimation de la dynamique de réseau.

2. Procédé d'émission de balises selon la revendication 1, **dans lequel** la puissance d'émission de balises avec laquelle le premier noeud radio émet par radio ses balises est basée sur l'estimation de la dynamique de réseau.

3. Procédé d'émission de balises selon la revendication 1 ou 2, **dans lequel** l'estimation de la dynamique de réseau est basée sur l'analyse de la vitesse relative, en comparaison avec le premier noeud radio, d'une multiplicité de noeuds radio voisins, et dans lequel on donne le plus grand impact sur l'estimation de la dynamique de réseau au noeud radio voisin qui présente la vitesse relative la plus élevée en comparaison avec le premier noeud radio.

4. Procédé d'émission de balises selon l'une quelconque des revendications 1 à 3, **dans lequel** le procédé comprend une étape, devant être accomplie avant l'étape de détermination d), consistant à :

- comparer des estimations de dynamique de réseau (320), et si l'estimation présente de la dynamique de réseau diffère au moins d'une quantité prédéterminée par rapport à une estimation précédente de la dynamique de réseau, le procédé passe à l'étape de détermination d), et sinon le procédé continue à surveiller les noeuds radio voisins dans le sous-ensemble conformément aux étapes a) - c).

5. Procédé d'émission de balises selon l'une quelconque des revendications 1 à 4, **dans lequel** l'étape d'estimation de la dynamique de réseau, l'estimation de la dynamique de réseau est au moins partiellement basée sur l'historique de perte de chemin des balises reçues à partir des noeuds radio dans le sous-ensemble.

6. Procédé d'émission de balises selon l'une quelconque des revendications 1 à 5, **comprenant en outre** une étape de *stockage* de paramètres de balises des messages de balises respectifs.

7. Procédé d'émission de balises selon la revendication 7, **dans lequel** les paramètres de balises comprennent au moins un paramètre concernant l'intensité de signal reçu du message de balise, et au moins un paramètre concernant l'instant d'arrivée des messages de balises.

8. Procédé d'émission de balises selon la revendication 6 ou 7, **dans lequel** les paramètres de balises comprennent des paramètres qui ont été inclus par le noeud radio émetteur dans le message de balise.

9. Procédé d'émission de balises selon la revendication 8, **dans lequel** au moins un paramètre inclus à l'origine par le noeud radio émetteur comprend un paramètre concernant la position du noeud émetteur.

10. Noeud radio (205) adapté pour la communication dans un réseau ad hoc ou à bonds multiples, le noeud radio comprenant une partie d'émission adaptée pour émettre des messages de balises et une partie de réception adaptée pour recevoir des messages de balises, le noeud radio étant
**caractérisé par**

- un moyen d'enregistrement de balises (505) pour enregistrer une multiplicité de messages de balises provenant d'une multiplicité d'autres noeuds radio, et pour déterminer des paramètres de balises, les paramètres de balises reçus comprenant au moins la puissance de signal reçu et l'instant d'arrivée respectifs des messages de balises reçus ;
- un moyen de stockage (510) pour stocker les paramètres de balises reçus ;
- un moyen de traitement statistique (515) pour effectuer une analyse statistique sur la multiplicité de paramètres de balises stockés, pour produire ainsi une estimation de la dynamique de réseau basée sur une vitesse relative en comparaison avec le noeud radio de chacun des autres noeuds radio ;
- un moyen de réglage de balises (520) pour régler la puissance et/ou le débit d'émission de messages de balises émis, sur la base de l'estimation de la dynamique de réseau.

11. Noeud radio selon la revendication 10, **dans lequel** le moyen de traitement statistique (515) est adapté pour estimer la dynamique de réseau au moins partiellement sur la base d'une analyse de la vitesse relative d'une multiplicité de noeuds radio voisins, et dans lequel on donne le plus grand impact sur l'estimation de la dynamique de réseau au noeud radio voisin qui présente la vitesse relative la plus élevée en comparaison avec le noeud radio.

12. Noeud radio selon l'une quelconque des revendication 10 et 11, **dans lequel** le moyen de réception de balises (505) est adapté pour définir un sous-ensemble, $NB_v$, de noeuds radio voisins, et le moyen de stockage (510) est adapté pour enregistrer et stocker des paramètres de balises reçus provenant au moins d'un deuxième noeud radio qui fait partie du sous-ensemble.

13. Système d'une multiplicité de noeuds radio (205, 215) adaptés pour communiquer dans un réseau ad hoc ou à bonds multiples, dans lequel les noeuds radio (205, 215) sont adaptés pour émettre des messages de balises entre eux, le système étant **caractérisé en ce que** les noeuds radio (205, 215) du système comprennent des moyens adaptés pour exécuter le procédé d'émission de balises conforme à l'une quelconque des revendications 1 à 9.

**Fig. 1 (Prior Art)**

**Fig. 2**

305 — Define a subset of neighbours.

310 — Record and store beacons.

315 — Estimate the network dynamics

320 — Compare estimates of network dynamics

no changes

changes

325 — Determine beacon rate

327 — Determine beacon transmission power

330 — Transmit beacons

*Fig. 3*

*Fig. 4*

15

*Fig. 5*